Europäisches Patentamt

European Patent Office

Office européen des brevets

(19)

(11) EP 0 564 042 B1

(12)

# EUROPEAN PATENT SPECIFICATION

(45) Date of publication and mention
of the grant of the patent:
**28.05.1997 Bulletin 1997/22**

(51) Int Cl.⁶: **G02B 6/28**, H04B 10/12,
H04B 10/14

(21) Application number: **93200904.6**

(22) Date of filing: **31.03.1993**

(54) **Method of operating an optical hybrid**

Verfahren zum Betreiben eines optischen Hybrids

Procédé de mise en action d'un hybride optique

(84) Designated Contracting States:
**AT BE CH DE DK ES FR GB GR IE IT LI LU NL PT SE**

(30) Priority: **03.04.1992 NL 9200633**

(43) Date of publication of application:
**06.10.1993 Bulletin 1993/40**

(73) Proprietor: **Koninklijke PTT Nederland N.V.
2509 CH Den Haag (NL)**

(72) Inventor: **Van Deventer, Mattijs Oskar
NL-2263 HP Leidschendam (NL)**

(56) References cited:
**EP-A- 0 248 234          WO-A-86/07513
GB-A- 2 214 381**

- **APPLIED OPTICS. vol. 26, no. 3, 1 February 1987, NEW YORK US pages 437 - 439 L. G. KAZOVSKY ET AL. 'All-fiber 90deg optical hybrid for coherent communications'**
- **APPLIED OPTICS. vol. 26, no. 19, 1 October 1987, NEW YORK US pages 4181 - 4184**
- **Y. WANG EN W.R. LEEB 'A 90deg optical fiber hybrid for optimal signal power utilization'**
- **JOURNAL OF LIGHTWAVE TECHNOLOGY. vol. 7, no. 2, February 1989, NEW YORK US pages 279 - 292 L.G. KAZOVSKY 'Phase- and Polarization-Diversity Coherent Optical Techniques'**

## Description

### A. Background of the invention

#### 1. Field of the invention

The invention is in the field of coherent optical detection techniques. It relates to a method of operating an optical hybrid for a coherent optical receiver.

#### 2. Prior Art

Coherent optical detection making use of phase diversity enables baseband detection without having to use "phase-locked-loop" (PLL) as it is certainly the case with homodyne detection. As it is thus possible to make efficient use of the electrical and optical bandwidth, phase diversity is therefore very suitable for multichannel coherent optical communication with high bit rates ($\geq$1Gbit/s). In addition, considerations regarding noise suppression, such as thermal noise, make it attractive to use phase diversity at high bit rates.

In order to recover the amplitude and the phase of a coherent optical signal, use is made, in the case of phase diversity, of optical hybrids. An optical hybrid is an m$\times$n multi-port having m signal inputs and n signal outputs, in which m,n$\geq$2, which optical hybrid, at two or more of the outputs, emits coherent products of signals presented at two or more of the inputs, which products have mutually well-defined phase differences. There are two types of such optical hybrids used for phase-diversity. Hybrids of the first type, called the polarisation type, generally achieve the desired phase differences between output signals having different polarisations, this being in contrast to those of the second type, called the coupling type, in which the phase differences between output signals having the same polarisation are achieved. Several versions are known of the polarisation type.

A first version of the polarisation type is a 2$\times$2 port based on the combination of a power coupler and a polarisation splitter. In this case, a phase shift of 90° is induced at the input of the polarisation splitter, between the split components, emerging from the splitter, of a mixed signal which comes from the coupler and which consists of a received signal and the signal coming from a local oscillator. Such a first version of a 2$\times$2 port is disclosed, for example, by reference [1]. A second version, disclosed by reference [2], is a 2$\times$2 port based on a power coupler/splitter having polarisation controls in the inputs and linear polarisers, set mutually orthogonally, in the outputs. In a third version, as disclosed by reference [3], setting of the 90° phase difference takes place by first separately polarising the input signals elliptically. The elliptically polarised signals are then combined and split in a power-splitting coupler, and are finally split out, with the aid of two polarisation-splitting couplers, into four signals having relative phases of 0°, 90°, 180° and 270°.

The sensitivity of all these known versions of polarisation-type multiports is the same if all the signals on the output side of such a multiport are used for detection and thermal noise is supressed as much as possible in the process. The use of more than two detectors in this case, however, makes a receiver complex and, moreover, expensive. If, moreover, balanced detection is used, this results in a decreasing bandwidth of the receiver and an increase in thermal noise. It is therefore desirable not to have to use more than two detectors for the detection. For a two-detector receiver, however, the known polarisation-type optical hybrids are not optimal. In the known polarisation-type m$\times$n ports having a 90° phase difference, the throughput is always $\leq$25%, that is to say that never more than 25% of the signal power at the input is extracted into each of the outputs used. Since optical hybrids which can be used for phase diversity can also be used for 'image-rejection' heterodyne receivers, as disclosed, for example, by reference [4], the same restriction applies to receivers of this type with respect to the throughput.

### B. Summary of the invention

The object of the invention is to provide a method of operating an optical hybrid of the polarisation type for having a throughput higher than 25%, which is therefore more advantageous for use in a two-detector receiver for coherent optical detection. Theoretical analysis of a passive, not necessarily loss-free 2$\times$2 port shows that, in the case of a phase difference of 90°, a throughput R of at most approximately 29% is still possible. This corresponds exactly with a teaching given by reference [6], which states that the minimal loss which is obtainable in 90° hybrids is 2.3 dB, to which corresponds a possible total throughput of 58.6%, or a possible throughput per output port of 29.3%. The invention achieves this in a polarisation-type optical hybrid.

Conventionally, polarisation states of an optical signal and changes therein are described with the aid of points on the Poincaré sphere. Polarisation-dependent components in an optical device which impose a defined polarisation state onto an optical signal, can also be represented by points on this sphere. Making use of this, it has been found in the present invention that, of an optical hybrid having a structure disclosed per se by reference [2], the polarisation-dependent components can be put into such positions, (i.e. settings of the polarisation controllers and placements of the polarisation analysers), the points on the Poincaré sphere corresponding to these positions fulfilling specific conditions, that in each case a 90° hybrid is obtained having a throughput greater than 25%. A method of operating an optical hybrid of the polarisation type comprising a first and a second input port for receiving a first and a second input signal, respectively, a first and a second output port for emitting a first and a second output signal, respectively, a polarization controller on each of the two input ports, respectively, for setting the polarisations of a respective one of the two input signals, a polarization-independent power coupler, disposed downstream the two polarisation controllers, for mixing, and distributing evenly according to power the two signals thus set according to polarisation, and a polariser on each of the two output ports for transforming a respective one of the two signals distributed by the coupler into a corresponding one of said two output optical signals, whereby said two output optical signals include, respectively, a first and a second coherent product of each of the input signals with a mutual phase difference of approximately 90°,

is therefore according to the invention characterised in that the two polarisation controllers are set to positions which, on the Poincaré sphere, correspond to points Q1 and Q2, and the polarisers are placed in positions which, on the Poincaré sphere, correspond to points Q3 and Q4, wherein said positions Q1 to Q4 inclusive are so selected that the angles on the Poincaré sphere between Q1 and Q3, between Q1 and Q4, between Q2 and Q3, and between Q2 and Q4 are smaller than 90°, whilst the circle through the points Q1, Q2 and -Q3 and the circle trhough the points Q1, Q2 and -Q4 intersect each other at angles of 90°, wherein the points -Q3 and -Q4 are the antipodes of the points Q3 and Q4, respectively.

## C. References

[1] T.G. Hodgkinson, et al.: "Demodulation of optical DPSK using in-phase and quadrature detection", Electronics Letters, 12th September 1985, Vol. 21, No. 19, pp. 867,868;

[2] L.G. Kazovsky, et al.: "All-fiber 90° optical hybrid for coherent communications", Applied Optics, Vol. 26, No. 3, 1 February 1987, pp. 437-439;

[3] GB-A-2214381 entitled "Optical phase-diversity receivers";

[4] C.J. Mahon: "Experimental verification of novel optical heterodyne image rejection receiver with polarization control", ECOC '90 Amsterdam, Vol. 1, pp. 389-392;

[5] J. Pietzsch: "Scattering matrix analysis of 3×3 fiber couplers", Journ. Lightwave Technology, Vol. 7, NO. 2, February 1989, pp. 303-307;

[6] L.G. Kazovsky, et al.: " Phase- and polarization-diversity coherent optical techniques", Journ. Lightwave Technology, Vol. 7, No. 2, February 1989, pp. 279-292.

## D. Brief description of the drawing

The invention will be described below in more detail with reference to a drawing consisting of the following figures:

FIG. 1      shows a block diagram of a general 2×2 port which can be used as an optical hybrid;

FIG. 2      shows the course of the upper limit of the throughput R as a function of the phase angle $\psi$ of an optical hybrid according to FIG. 1;

FIG. 3      shows a diagram of a coherent optical phase-diversity receiver with a polarisation-type optical hybrid;

FIG. 4a      shows known positions of the polarisation-dependent components for a 90° hybrid in the receiver according to FIG. 3;

FIG. 4b      shows points on the Poincaré sphere which correspond to the positions according to FIG. 4a;

FIG. 5a      shows, in a manner similar to that of FIG. 4a, positions of the polarisation-dependent components for a 90° hybrid operated according to the invention;

FIG. 5b      shows points on the Poincaré sphere which correspond to the positions according to FIG. 5a.

## E. Description of illustrative embodiments

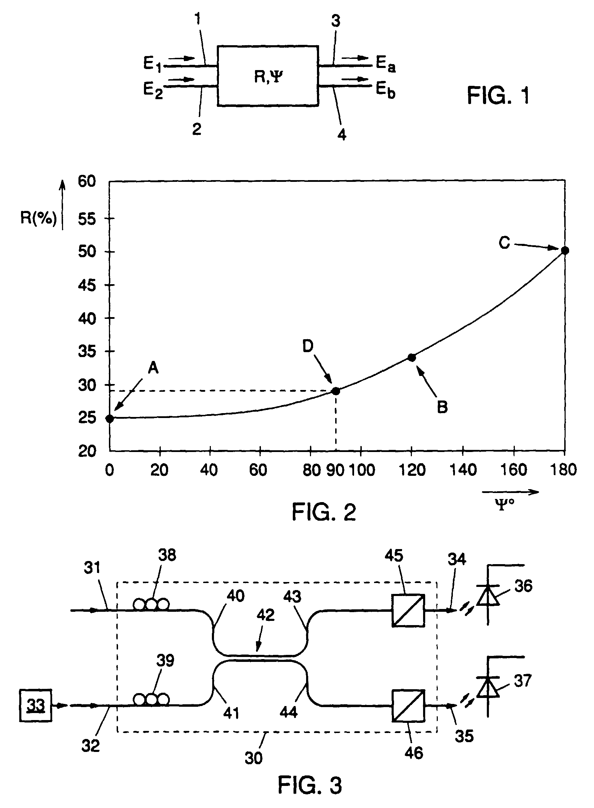

FIG. 1 depicts a block diagram of a general 2×2 port, which is known as an optical hybrid. A port of this type has two inputs 1 and 2 and two outputs 3 and 4, and a throughput R and a phase angle $\psi$. If input signals $E_1$ and $E_2$ having amplitudes $\acute{E}_1$ and $\acute{E}_2$, respectively, and having an arbitrary mutual phase difference $\Phi$ are presented at inputs 1 and 2 of said port, respectively viz.:

$$E_1(t) = \acute{E}_1 \cos(\omega t) \quad\quad (1a)$$

$$E_2(t) = \acute{E}_2 \cos(\omega t + \Phi) \quad\quad (1b)$$

the signals at the outputs 3 and 4 can then be written as

$$E_a(t) = R^{\frac{1}{2}}\{\acute{E}_1 \cos(\omega t) + \acute{E}_2 \cos(\omega t + \Phi)\} \quad (2a)$$

$$E_b(t) = R^{\frac{1}{2}}\{\acute{E}_1 \cos(\omega t) + \acute{E}_2 \cos(\omega t + \Phi + \Psi)\} \quad (2b)$$

If such a port is passive, the total output power is always less than or equal to the input power for each value of the amplitudes $\acute{E}_1$, $\acute{E}_2$ and phase difference $\Phi$. If $\acute{E}_a$ and $\acute{E}_b$ represent the amplitudes of the output signals $E_a(t)$ and $E_b(t)$, respectively, the following relationship therefore holds true:

$$\left|\acute{E}_a\right|^2 + \left|\acute{E}_b\right|^2 \leq \left|\acute{E}_1\right|^2 + \left|\acute{E}_2\right|^2 \quad\quad (3)$$

By combining the expressions (2a), (2b) and (3) it can be deduced that

$$R \leq \{4 \cos^2(\Psi/4)\}^{-1} \qquad (4)$$

The expression (4) defines an upper limit for the throughput R as a function of the phase angle $\Psi$ of the hybrid. The course of this upper limit is depicted in FIG. 2. In this figure:

point A ($\Psi = 0°$, R = 25%) corresponds to a phase-shifting-type optical hybrid having four Y junctions;
point B ($\Psi = 120°$, R = 33.3%) corresponds to a symmetrical 3×3 coupler;
point C ($\Psi = 180°$, R = 50%) corresponds to a symmetrical 2×2 coupler.
Point D ($\Psi = 90°$, R = 29.3%) represents, at least theoretically, an optical hybrid having a phase shift of 90°, hereinafter called 90° hybrid, and a throughput of more than 25%.

Hereinafter, an embodiment of such a 90° hybrid of the polarisation type will be described, such as can be used in a coherent detection system employing phase diversity with two photodetectors.

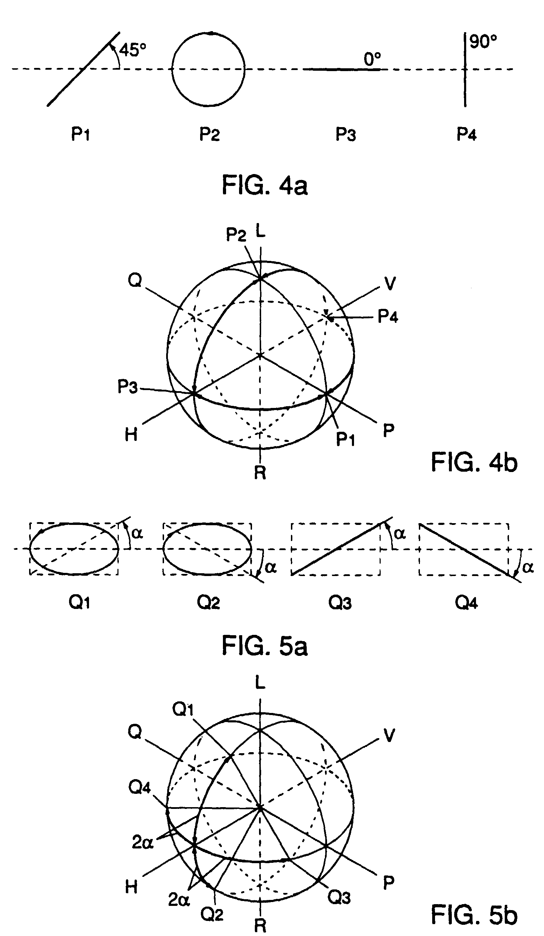

FIG. 3 depicts a diagram of a coherent optical phase-diversity receiver having a 90° hybrid 30 with a structure known per se (see reference [2] under C., more particularly FIG. 1). Said hybrid 30 has a first signal input 31 for a received signal and a second signal input 32 for an oscillator signal coming from a local oscillator 33. The hybrid 30 furthermore has a first signal output 34 and a second signal output 35, coupled with a first photodetector 36 and a second photodetector 37, respectively. The first signal input 31 and the second signal input 32 are passed via a first polarisation controller 38 and a second polarisation controller 39, respectively, to inputs 40 and 41 of a 3dB power coupler 42. Outputs 43 and 44 of the power coupler 42 are passed via a first linear polariser 45 and a second linear polariser 46, respectively, to the signal outputs 34 and 35. In the known hybrid, the linear polarisers 45 and 46 are placed, as is conventional, at angles of 0° and 90° with respect to the horizontal, respectively, while the polarisation controllers 38 and 39 are set to a linear polarisation at an angle of 45° and to a circular polarisation, respectively. Said placements and settings, hereinafter jointly referred to as positions, are depicted diagrammatrically in FIG. 4a. In this figure, the positions of the polarisation controllers 38 and 39 and of the polarisers 45 and 46 are indicated by P1, P2, P3 and P4, respectively. Said positions correspond to points on the Poincaré sphere. This is depicted in FIG. 4b, the points in question being indicated by P1 to P4 inclusive. The points P3 and P4 are each others antipodes on the sphere, that is to say P3 = -P4. Since the circles through the points P1, P2 and -P3 and through the points P1, P2 and -P4 intersect at angles of 90°, said points represent a 90° hybrid. Since the angles of arc on the sphere between P1 and P3, P1 and P4, P2 and P3, and P2 and P4 are all 90°, no throughput higher than 25% is possible for this hybrid.

In the most general case, a 90° hybrid having a higher throughput is obtained if the corresponding points on the sphere are situated in such a way that two requirements are satisfied, viz. that said angles of arc are all smaller than 90° and that the circles indicated intersect at angles of 90°. Hereinafter it will be shown that, if the linear polarisers 45 and 46 are placed at angles $\alpha$ and $-\alpha$ with respect to the horizontal, respectively, and the polarisation controllers 38 and 39 are set to producing left-hand and right-hand elliptical polarisation at the same angle $\alpha$, respectively, said angle $\alpha$ can be chosen in such a way that the corresponding points on the Poincaré sphere satisfy said two requirements and the theoretically highest throughput R can be achieved at the same time. The polarisation controllers should have their major axis placed horizontally, whereas the angle $\alpha$ is the angle representative of the ellipticity of said polarisations. Said positions for the polarisers and the controllers are depicted diagrammatically in FIG. 5a. In this figure, said optimum positions of the polarisation controllers 38 and 39 and the polarisers 45 and 46 are indicated by Q1, Q2, Q3 and Q4 respectively. Said positions Q1 to Q4 inclusive correspond to points indicated accordingly on the Poincaré sphere as depicted in FIG. 5b. In the case of a hybrid with such positions for the polarisation-dependent components, it is possible to derive, for example using the known polarisation-matrix calculation according to Jones, the following expressions for the phase angle $\Psi$ and the throughput R as a function of the angle $\alpha$:

$$\Psi = 180° - 4*\arctan(\tan^2 \alpha) \qquad (5)$$

and

$$R = \tfrac{1}{2}(\cos^4 \alpha + \sin^4 \alpha)*100\% \qquad (6)$$

For a 90° hybrid it is required that the phase angle $\Psi = 90°$. According to the expression (5), this is achieved at the setting angle $\alpha \approx 32.77°$, while according to expression (6), at said $\alpha$ the throughput R≈29.3%, exactly equal to the theoretical upper limit already found hereinbefore (see point D in FIG. 2). It is not just the one set of points Q1 to Q4 inclusive, based on the setting angle $\alpha$ found, which corresponds to an optimal 90° hybrid. In fact, each set of four points on the Poincaré sphere which can be converted by rotation into the set Q1 to Q4 inclusive, represents such an optimum hybrid. Since retardation corresponds to such a rotation, any retardation of the set is therefore also permitted.

The expressions (5) and (6) have in fact been derived for constant input polarisations of the input signals at the signal inputs 31 and 32. In order to achieve optimum use of a 90° hybrid based thereupon, it has to be ensured that this is the case. This can be achieved in a conventional manner by subjecting one or each of the two input signals to a prior active polarisation control, which is driven via a feedback loop from the downstream electrical circuit. Another possibility to achieve this is to place a polariser upstream of one or each of the two signal inputs. The hybrid can then be set to a fixed position and the phase angle no longer depends on residual fluctuations in the input polarisations.

**Claims**

1. Method of operating an optical hybrid of the polarisation type comprising

   - a first (31) and a second (32) input port for receiving a first and a second input signal, respectively,
   - a first (34) and a second (35) output port for emitting a first and a second output signal, respectively,
   - a polarization controller (38, 39) on each of the two input ports, respectively, for transforming the polarisation state of a respective one of the two input signals into a predetermined polarisation state,
   - a polarization-independent power coupler (42), disposed downstream the two polarisation controllers, for mixing, and distributing evenly according to power the two signals thus transformed in polarisation, and
   - a polariser (45, 46) on each of the two output ports for transforming in polarisation a respective one of the two signals distributed by the coupler into a corresponding one of said two output optical signals, whereby said two output optical signals include, respectively, a first and a second coherent product of each of the input signals with a mutual phase difference of approximately 90°,

   said method being **characterised in that** the two polarisation controllers (38, 39) are set to positions which, on the Poincaré sphere, correspond to points Q1 and Q2, and the polarisers (45, 46) are placed in positions which, on the Poincaré sphere, correspond to points Q3 and Q4, wherein said positions Q1 to Q4 inclusive are so selected that the angles on the Poincaré sphere between Q1 and Q3, between Q1 and Q4, between Q2 and Q3, and between Q2 and Q4 are smaller than 90°, whilst the circle through the points Q1, Q2 and -Q3 and the circle through the points Q1, Q2 and -Q4 intersect each other at angles of 90°, wherein the points -Q3 and -Q4 are the antipodes of the points Q3 and Q4, respectively.

2. Method according to Claim 1, **characterized in that** the set of points Q1 to Q4 inclusive is a set of points which, by rotation on the Poincaré sphere, can be converted into a set of points representing positions for which the polarisers (45, 46) are linear and are essentially positioned at angles alpha and -alpha with respect to the horizontal, and the polarisation controllers (38, 39) are set to produce a mutually essentially equal but oppositely directed elliptical polarisation with the ellipse major axis placed horizontally and the angle representative of the ellipticity having the same value alpha.

3. Method according to Claim 2, **characterized in that** the angle alpha is approximately 32.8°.

4. Method according to any one of the preceding claims 1 to 3, **characterised in that** said optical hybrid is incorporated in an optical receiver further comprising an optical local oscillator (33) and polarisation control means for matching/adjusting with respect to one another a received optical signal and an optical signal coming from the local oscillator, wherein said matched signals are launched in the two input ports of said optical hybrid; and wherein the two output signals extracted from the two output ports of said hybrid are detected by two detectors (36, 37) emitting two output signals having a phase difference with respect to one another of 90°.

**Patentansprüche**

1. Verfahren zum Betreiben eines optischen Hybrids vom Polarisationstyp,

   - mit einem ersten (31) und einem zweiten (32) Eingangsport zum Empfangen eines ersten bzw. eines zweiten Eingangssignals,
   - mit einem ersten (34) und einem zweiten (35) Ausgangsport zum Aussenden eines ersten bzw. eines zweiten Ausgangssignals,
   - mit je einem Polarisationsregler (38, 39) an beiden Eingangsports zum Umformen des Polarisationszustandes der jeweiligen zwei Eingangssignale in einen vorbestimmten Polarisationszustand,
   - mit einem hinter den beiden Polarisationsreglern angeordneten polarisationsunabhängigen Leistungskoppler (42) zum Mischen und leistungsmässig gleichen Verteilen der beiden derart polarisationsumgeformten Signale, und
   - mit einem Polarisator (45, 46) an jedem der zwei Ausgangsports zum polarisationsmässigen Umformen in ein entsprechendes der genannten zwei optischen Ausgangssignale von je einem der beiden durch den Koppler verteilten Signale, wobei die genannten beiden optischen Ausgangssignale ein erstes bzw. ein zweites kohärentes Produkt eines jeden Eingangssignals mit einem gegenseitigen Phasenunterschied von näherungsweise 90° einschliessen,

wobei das genannte Verfahren dadurch gekennzeichnet ist, dass die zwei Polarisationsregler (38, 39) auf Einstellungen gesetzt werden, die auf der Poincaré-Kugel den Punkten Q1 und Q2 entsprechen, und dass die Polarisatoren (45, 46) auf Einstellungen gesetzt werden, die auf der Poincaré-Kugel den Punkten Q3 und Q4 entsprechen, wobei die genannten Positionen Q1 bis Q4 inklusive derart gewählt sind, dass die Winkel auf der Poincaré-Kugel zwischen Q1 und Q3, zwischen Q1 und Q4, zwischen Q2 und Q3, und zwischen Q2 und Q4 kleiner als 90° sind, wohingegen, der Kreis durch die Punkte Q1, Q2 und -Q3 und der Kreis durch die Punkte Q1, Q2 und -Q4 sich gegenseitig unter Winkeln von 90° schneiden, wobei die Punkte -Q3 und -Q4 jeweils die Antipoden der Punkte Q3 bzw. Q4 sind.

2. Verfahren nach Anspruch 1, dadurch gekennzeichnet, dass der Satz der Punkte Q1 bis Q4 inklusive ein Satz von Punkten ist, der durch Rotation auf der Poincaré-Kugel in einen Satz von Punkten übergeführt werden kann, der Einstellungen darstellt, für welche die Polarisatoren (45, 46) linear und im wesentlichen auf die Winkel alpha und -alpha bezüglich der Horizontalen eingestellt sind, und dass die Polarisationsregler (38, 39) derart eingerichtet sind, dass sie eine gegenseitig wesentlich gleiche, aber entgegengesetzt gerichtete elliptische Polarisation mit der Hauptachse der Ellipse in horizontaler Richtung erzeugen, wobei der für die Elliptizität massgebende Winkel denselben Wert alpha aufweist.

3. Verfahren nach Anspruch 2, dadurch gekennzeichnet, dass der Winkel alpha ungefähr 32.8° beträgt.

4. Verfahren nach einem der vorhergehenden Ansprüche 1 bis 3, dadurch gekennzeichnet, dass das genannte optische Hybrid in einen optischen Empfänger eingebaut ist, der weiter einen lokalen optischen Oszillator (33) und Polarisationssteuermittel zur gegenseitigen Anpassung/Einstellung eines empfangenen optischen Signals und eines optischen Signals umfasst, das aus dem lokalen Oszillator stammt, wobei die genannten angepassten Signale in die zwei Eingangsports des genannten optischen Hybrids eingespeist werden und wobei die zwei aus den beiden Ausgangsports des genannten optischen Hybrids abgeführten Ausgangssignale durch zwei Detektoren (36, 37) detektiert werden, welche zwei Ausgangssignale abgeben, die untereinander einen Phasenunterschied von 90° aufweisen.

## Revendications

1. Procédé de fonctionnement d'un hybride optique du type à polarisation comprenant :

- un premier (31) et un second (32) port d'entrée pour recevoir respectivement un premier et un second signal d'entrée,
- un premier (34) et un second (35) port de sortie pour émettre respectivement un premier et un second signal de sortie,
- un dispositif de commande de polarisation (38, 39) sur chacun des deux ports d'entrée, pour transformer respectivement l'état de polarisation d'un respectif des deux signaux d'entrée en un état de polarisation prédéterminé,
- un coupleur de puissance indépendant de la polarisation (42) disposé en aval des deux dispositifs de commande de polarisation, pour mélanger, et distribuer régulièrement selon la puissance des deux signaux ainsi transformés en polarisation, et
- un polariseur (45, 46) sur chacun des deux ports de sortie pour transformer en polarisation un respectif des deux signaux distribués par le coupleur en un correspondant desdits deux signaux optiques de sortie, de sorte que lesdits deux signaux optiques de sortie comprennent, respectivement, un premier et un second produit cohérent de chacun des deux signaux d'entrée avec une différence de phases mutuelle de 90° approximativement,

ledit procédé étant caractérisé en ce que les deux dispositifs de commande de polarisation (38, 39) sont réglés à des positions qui, sur la sphère de Poincaré, correspondent aux points Q1 et Q2, et les polariseurs (45, 46) sont placés dans des positions qui, sur la sphère de Poincaré, correspondent aux points Q3 et Q4, où lesdites positions Q1 et Q2 inclues, sont sélectionnées pour que les angles sur la sphère de Poincaré entre Q1 et Q3, entre Q1 et Q4, entre Q2 et Q3, et entre Q2 et Q4 soient plus petits que 90°, alors que le cercle à travers les points Q1, Q2 et - Q3 et le cercle à travers les points Q1, Q2 et - Q4 se coupent l'un l'autre avec des angles de 90°, où les points - Q3 et - Q4 sont respectivement aux antipodes des points Q3 et Q4.

2. Procédé selon la revendication 1, caractérisé en ce que le jeu de points Q1 à Q4 inclus, est un jeu de points qui, par la rotation sur la sphère de Poincaré, peut être converti en un jeu de points représentant les positions pour lesquelles les polariseurs (45, 46) sont linéaires et sont essentiellement positionnés avec des angles $\alpha$ et - $\alpha$ par rapport à l'horizontal, et les dispositifs de commande de polarisation (38, 39) sont réglés pour produire une polarisation elliptique mutuellement égale essentiellement mais dirigée de façon opposée avec l'axe principal de l'ellipse placé horizontalement et l'angle représentatif de l'excentricité ayant la même valeur $\alpha$.

3. Procédé selon la revendication 2, caractérisé en ce que l'angle $\alpha$ est approximativement de 32,80°.

4. Procédé selon l'une quelconque des revendications précédentes 1 à 3, caractérisé en ce que ledit hybride optique est incorporé dans un récepteur optique comprenant en outre un oscillateur local optique (33) et un moyen de commande de polarisation pour adapter/ajuster l'un par rapport à l'autre un signal optique reçu et un signal optique venant de l'oscillateur local, où lesdits signaux adaptés sont lancés dans les deux ports d'entrée dudit hybride optique ; et où les deux signaux de sortie extraits des deux ports de sortie dudit hybride sont détectés par deux détecteurs (36, 27) émettant deux signaux de sortie ayant une différence de phases l'un par rapport à l'autre de 90°.

FIG. 1

FIG. 2

FIG. 3

8

45° 0° 90°

P1          P2          P3          P4

## FIG. 4a

P2 L
Q
V
P4
P3
H
P1
P
R

## FIG. 4b

α          α          α          α

Q1          Q2          Q3          Q4

## FIG. 5a

L
Q1
Q
V
Q4
2α
H
2α
Q2   R   Q3
P

## FIG. 5b